# EUROPÄISCHE PATENTANMELDUNG

(11) **EP 3 792 098 A1**
(43) Veröffentlichungstag der Anmeldung: **17.03.2021**
(21) Anmeldenummer: 20195316.3
(22) Anmeldetag: 09.09.2020
(51) Int. Cl.: B60L 58/18, B60L 50/60

(54) **FLURFÖRDERZEUG MIT EINEM ELEKTRISCHEN ENERGIESPEICHER**

(30) Priorität: 16.09.2019 DE 102019124873
(71) Anmelder: Jungheinrich Aktiengesellschaft, 22047 Hamburg (DE)
(72) Erfinder: Göpner, Oliver, 23845 Oering (DE); Schöler, Susanne, 22955 Hoisdorf (DE); Wegner, Christian, 25436 Moorrege (DE); von Werder, Martin, 22949 Ammersbek (DE)
(74) Vertreter: Hauck Patentanwaltspartnerschaft mbB

(57) **Zusammenfassung**

Flurförderzeug mit mindestens einem elektrisch gespeisten Antrieb und einem elektrischen Energiespeicher, der über ein Batteriemanagementsystem (BMS) verfügt und mindestens ein Batteriemodul aufweist, wobei das mindestens eine Batteriemodul und das Batteriemanagementsystem jeweils ein Gehäuse mit elektrischen Anschlüssen aufweisen und die Gehäuse räumlich voneinander getrennt in dem Flurförderzeug angeordnet sind, wobei das Batteriemanagementsystem mindestens einen Schalter aufweist, mit dem eine Verbindung zwischen dem mindestens einen Batteriemodul und dem elektrisch gespeisten Antrieb getrennt werden kann.

## Beschreibung

Die vorliegende Erfindung betrifft ein Flurförderzeug mit mindestens einem elektrisch gespeisten Antrieb und einem elektrischen Energiespeicher. Der elektrisch gespeiste Antrieb kann beispielsweise ein Fahrantrieb sein, es sind aber auch andere elektrisch gespeiste Antriebe in dem Flurförderzeug möglich. Der elektrische Energiespeicher verfügt über ein Batteriemanagementsystem und mindestens ein Batteriemodul. Das Batteriemanagementsystem steuert und überwacht insbesondere bei Feststoff- und/oder Ionenbatterien den Betrieb des Batteriemoduls. So kann das Batteriemanagementsystem beispielsweise die Aufgabe übernehmen, die Spannung in einzelnen Batteriezellen eines Batteriemoduls zu überwachen.

Aus DE 10 2013 113 809 A1 ist ein Flurförderzeug mit einem batterie-elektrischen Antrieb bekannt geworden. Der elektrische Energiespeicher ist aus mindestens zwei Teilbatterien, jeweils bestehend aus Batteriemodulen, aufgebaut, wobei jedes der Batteriemodule wartungsfrei ist und die Teilbatterien an konkret definierten Positionen im Flurförderzeug montiert sind. Es wird hierdurch die Möglichkeit geschaffen, statt eines großen monolithischen Batterieblocks, die Batteriemodule flexibler in dem Fahrzeug anzuordnen.

Aus DE 10 2009 020 178 ist ein System zum Speichern von elektrischer Energie in einem Hybrid- oder Elektrofahrzeug bekannt. Zur Steuerung des Energieflusses in dem Hybridfahrzeug ist ein Hybridcontroller vorgesehen, der unter anderem darüber entscheidet, ob und in welcher Menge dem Energiespeicher Energie entnommen oder zugeführt wird. Für jeden der Energiespeicher ist ein Batteriemanagementsystem vorgesehen und zudem sind entsprechende Schütze bzw. Schaltelemente vorgesehen, über die aus Sicherheitsgründen eine elektrisch leitende Verbindung für die Batterie hergestellt wird.

Der Erfindung liegt die Aufgabe zugrunde, ein Flurförderzeug mit einem elektrischen Energiespeicher bereitzustellen, das einen modular aufgebauten Energiespeicher platzsparend in das Fahrzeug integriert.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug ist mit mindestens einem elektrisch gespeisten Antrieb ausgestattet und besitzt einen elektrischen Energiespeicher, der über ein Batteriemanagementsystem verfügt und mindestens ein Batteriemodul aufweist. Erfindungsgemäß besitzt das mindestens eine Batteriemodul und das Batteriemanagementsystem jeweils ein Gehäuse mit elektrischen Anschlüssen. Zudem sind die Gehäuse räumlich voneinander getrennt in dem Flurförderzeug angeordnet, wobei das Batteriemanagementsystem mindestens einen Schalter aufweist, mit dem eine Verbindung zwischen dem mindestens einen Batteriemodul und dem elektrisch gespeisten Antrieb getrennt werden kann. Das erfindungsgemäße Flurförderzeug besitzt den Vorteil, dass die aus Sicherheitsgründen vorzusehenden Schalter, insbesondere das für jeden elektrischen Strang vorzusehende Schütz, nicht in den Batteriemodulen vorgesehen sind, sondern zentral in dem Batteriemanagementsystem. Hierdurch kann bei einem elektrischen Energiespeicher mit mehr als einem Batteriemodul der Bauraum im Modul für die zusätzlichen Schütze eingespart werden. Insgesamt werden so die Batteriemodule kompakter ausgelegt und damit flexibler für den Einsatz im Flurförderzeug.

In einer bevorzugten Weiterbildung weist das mindestens eine Batteriemodul mehrere Batteriezellen auf. Ferner besitzt das Batteriemodul keinen Schalter, der eine Verbindung zwischen den Batteriezellen und den elektrischen Anschlüssen des jeweiligen Batteriemoduls trennen kann. Solche Schalter sind beispielsweise in Form von Schützen in dem Batteriemanagementsystem vorgesehen. Sollte es für einen der elektrischen Anschlüsse der Batterie notwendig sein, die elektrische Verbindung zu trennen, so erfolgt dies über den entsprechenden Schalter im Batteriemanagementsystem. Dies gilt auch für Sicherheitsfunktionen des jeweiligen Batteriemoduls, die auch über den Schalter im Batteriemanagementsystem ausgeführt werden.

In einer bevorzugten Ausgestaltung ist das Flurförderzeug mit einer fahrzeugseitigen Ladebuchse ausgestattet, die mit dem Batteriemanagementsystem verbunden ist. Über die Verbindung kann sowohl die Ladeleistung an das mindestens eine Batteriemodul weitergeleitet werden. Ebenso können Steuersignale und Statusinformationen zu Batterie und Ladevorgang über die Ladebuchse an das Batteriemanagementsystem weitergeleitet werden oder umgekehrt von dem Batteriemanagementsystem kommend über die Ladebuchse an eine externe Steuerung.

In einer bevorzugten Weiterbildung ist ein Sammelschienenmodul vorgesehen, das einen Minuspol des mindestens einen Batteriemoduls mit dem mindestens einen elektrischen Antrieb verbindet. Bei dieser Ausgestaltung wird der elektrische Stromkreis für den elektrischen Antrieb für den Pluspol über das Batteriemanagementsystem und für den Minuspol über das Sammelschienenmodul geschlossen.

In einer besonders bevorzugten Ausgestaltung ist der elektrische Energiespeicher mit zwei oder mehr Batteriemodulen ausgestattet, die von einem gemeinsamen Batteriemanagementsystem gesteuert werden. Bevorzugt sind auch die beiden Batteriemodule räumlich getrennt voneinander in dem Fahrzeug angeordnet und über elektrische Leitungen oder Schienen entsprechend miteinander verbunden.

In einer weiter bevorzugten Ausgestaltung besitzt jedes Batteriemodul mehrere Batteriestacks. In einer vorteilhaften Ausgestaltung ist für jeden Batteriestack ein Stackcontroller oder alternativ ein Verbund von Zellcontrollern vorgesehen, der für den jeweiligen Stack über Sensoren und eine entsprechende Steuerung Spannung, Temperatur, Leistung und weitere Kenngrößen erfasst und steuert bzw. regelt. Der Stackcontroller bildet eine dem Batteriemanagementsystem logisch zu Grunde liegende Steuerung. Hierfür sind bevorzugt mehrere Stackcontroller mit dem Batteriemanagementsystem verbunden.

In einer bevorzugten Ausgestaltung ist das Batteriemanagementsystem in einem Gehäuse untergebracht, das mehrere Leistungskontakte für die Batteriemodule und mindestens einen Ausgangskontakt für die elektrischen Verbraucher aufweist. Jeder der Leistungskontakte ist bevorzugt mit einem Schütz ausgestattet, das den elektrischen Leistungskontakt trennen kann.

In einer besonders bevorzugten Ausgestaltung sind die Leistung- und/oder die Ausgangskontakte in dem Gehäuse des Batteriemanagementsystems integriert. Die Integration kann beispielsweise dadurch erfolgen, dass die Kontakte in das Gehäusematerial eingespritzt oder eingegossen sind. Durch das Eingießen oder Einspritzen metallischer Kontakte in das Kunststoffmaterial kann hier mit einfachen Mitteln eine gut wirksame Verbindung hergestellt werden. Bevorzugt sind in dem Gehäuse des Batteriemanagementsystems auch Stromsensoren für die mehreren Leistungskontakte vorgesehen. Die Stromsensoren können beispielsweise einen Überstrom feststellen, um das Schütz entsprechend zu schalten.

In einer weiter bevorzugten Ausgestaltung besitzt das Batteriemanagementsystem einen Anschluss für einen elektrischen Steckverbinder. Der Anschluss kann beispielsweise eine in die Form eingelassene Halterung für den elektrischen Steckverbinder sein, der dann nur noch entsprechend in die Halterung eingesetzt wird.

In einer weiter bevorzugten Ausgestaltung ist eine Signalleitung für einen bidirektionalen Signalaustausch zwischen dem Batteriemanagementsystem und dem mindestens einen Batteriemodul vorgesehen.

Ein bevorzugtes Ausführungsbeispiel der Erfindung wird anhand der nachfolgenden Figuren erläutert. Es zeigen:
- Fig. 1: ein Flurförderzeug mit einem elektrischen Energiespeicher, der ein Batteriemanagementsystem und ein Batteriemodul besitzt,
- Fig. 2: einen elektrischen Energiespeicher mit zwei jeweils gleichartigen Batteriemodulen und einem BMS-Modul,
- Fig. 3: einen elektrischen Energiespeicher mit einem Batteriemanagementsystem und einem Batteriemodul, das jedoch gegenüber dem Batteriemodul aus Fig. 1 die doppelte Kapazität besitzt,
- Fig. 4: den elektrischen Energiespeicher mit zwei Batteriemodulen, die unterschiedliche Kapazität besitzen und
- Fign. 5a,b: das Batteriemanagementsystem mit seinem Gehäuse von der Vorder- und der Rückseite.

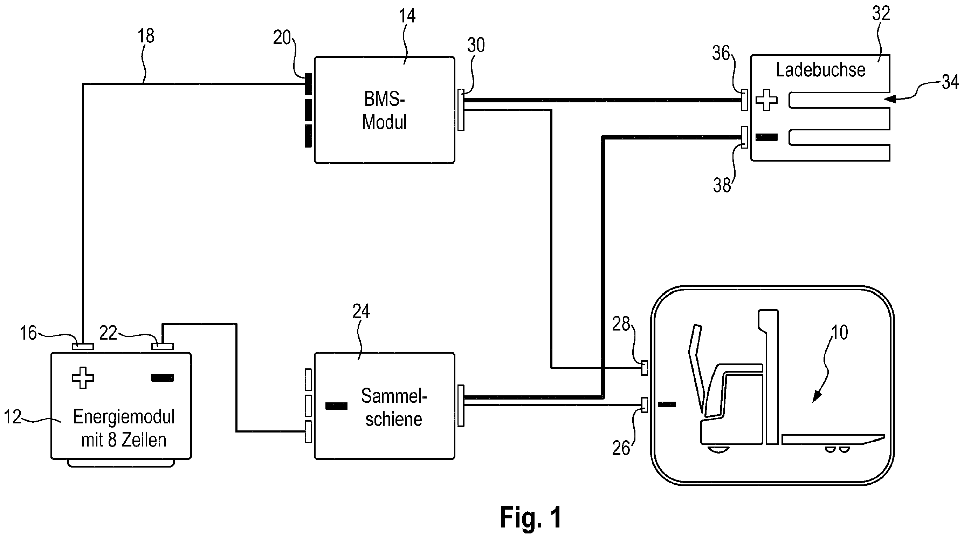

Fig. 1 zeigt in einer schematischen Ansicht ein deichselgeführtes Flurförderzeug 10, das einen elektrischen Fahrantrieb sowie möglicherweise einen elektrisch betätigten Hubantrieb besitzt. Der oder die elektrischen Antriebe werden von einem Batteriemodul 12 eingespeist, das Batteriemodul 12 besitzt ein abgeschlossenes Gehäuse, das mit elektrischen Kontakten für den Plus- und Minuspol ausgestattet ist. Nicht dargestellt sind Kontakte für eine Daten- oder Signalleitung, mit denen das Batteriemodul 12 mit einem Batteriemanagementsystem 14 verbunden ist. Das Batteriemanagementsystem 14 besitzt ein eigenes Gehäuse, das räumlich getrennt von dem Batteriemodul 12 in dem Flurförderzeug 10 angeordnet ist. Der Pluspol 16 des Batteriemoduls 12 steht über eine Leitung 18 mit einem Leistungsanschluss 20 des Batteriemanagementsystems 14 in Verbindung. Das Batteriemanagementsystem 14 besitzt zudem eine nichtdargestellte Daten- und Signalleitung mit der Zustandssignale und Daten von dem Batteriemodul 12 empfangen werden können. Ein Minuspol 22 des Batteriemoduls 12 steht über eine Sammelschiene 24 mit einem Minuspol 26 an dem Flurförderzeug in Verbindung. In den Figuren 1 bis 4 ist diese Verbindung symbolisch dargestellt und zeigt den Minuspol 26 sowie den Pluspol 28 des von dem Batteriemodul 12 gespeisten elektrischen Verbrauchers. Der Anschluss 28 steht mit einem Ausgangsanschluss 30 des Batteriemanagementsystems 14 in Verbindung. Der oder die elektrischen Verbraucher in dem Flurförderzeug 10 sind mit ihren Anschlusskontakten 26 und 28 über die Sammelschiene 24 und das Batteriemanagementsystem 14 mit dem Batteriemodul 12 verbunden.

Wie ebenfalls in Fig. 1 dargestellt, kann das Flurförderzeug 10 mit einer Ladebuchse 32 ausgestattet sein. Die Ladebuchse 32 ist als fahrzeugfeste Ladebuchse mit einer von außen zugänglichen Steckbuchse 34 ausgestattet. Elektrisch verbunden ist die Ladebuchse 32 über ihre Kontakte 36, 38 entweder mit dem Ausgangskontakt 30 des Batteriemanagementsystems oder mit der Sammelschiene 24. Für den Austausch von Daten und Signalen, kann die Ladebuchse 32 auch zusätzlich mit einer Signalleitung versehen sein. Diese kann beispielsweise direkt mit einer Fahrzeugsteuerung verbunden sein oder an dem Batteriemanagementsystem 14 anliegen. Im Betrieb stellt die Ladebuchse beispielsweise über diese Signalleitung sicher, dass eine Wegfahrsperre an dem Fahrzeug aktiviert ist. Für einen Ladevorgang wird das Energiemodul 12 über Kontakte 36 und 38 der Ladebuchse 32 gespeist, wobei der Ladestrom über das Batteriemanagementsystem 14 und die Sammelschiene 24 fließt.

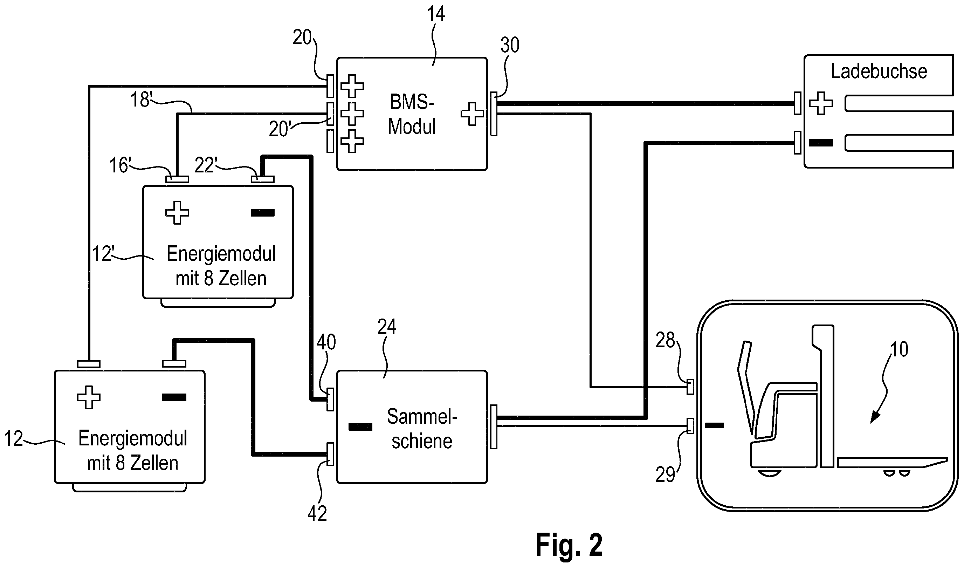

Fig. 2 zeigt eine einfache Erweiterung des Energiespeichers. Gleiche Komponenten sind mit gleichen Bezugszeichen wie in Fig. 1 bezeichnet. Das zusätzliche Batteriemodul 12' ist baugleich mit dem Batteriemodul 12, beide Batteriemodule besitzen jeweils acht Zellen. Das zusätzliche Batteriemodul 12' ist mit seinem Pluspol 16' über eine Leitung 18' mit einem Leistungskontakt 20' an das Batteriemanagementsystem 14 angeschlossen. Das Batteriemanagementsystem verarbeitet die von den Batteriemodulen 12 und 12' anliegende elektrische Leistung, um sie gemeinsam über den Ausgang 30 an den entsprechenden Kontakt 28 anzulegen. Der zugehörige Minuspol 29 gehört ebenfalls zu dem Flurförderzeug 10. Der Kontakt 22' des Batteriemoduls 12' liegt über den Anschluss 40 an der Sammelschiene 24 an. In Fig. 2 liegt der Kontakt 22 des Batteriemoduls 12 an einem zweiten Anschluss 42 der Sammelschiene 24 an. Obwohl Anschlüsse 40, 42 als separate Anschlüsse dargestellt sind, können diese auch als ein gemeinsamer Anschluss an der Sammelschiene 24 ausgebildet sein. Die angeschlossenen Minuspole 20, 22' der Batteriemodule werden in der Sammelschiene 24 zusammenführt und liegen gemeinsam an deren Anschluss 26 an.

Neben der räumlichen Trennung der Module im Flurförderzeug und der so gewonnenen größeren Flexibilität bei ihrer Anordnung im Innenraum, zeigt das Ausführungsbeispiel mit zwei Batteriemodulen auch einen weiteren Vorteil, da dasselbe Batteriemanagementsystem 14 sowohl bei der Konfiguration aus Fig. 1 als bei der Konfiguration aus Fig. 2 zum Einsatz kommt.

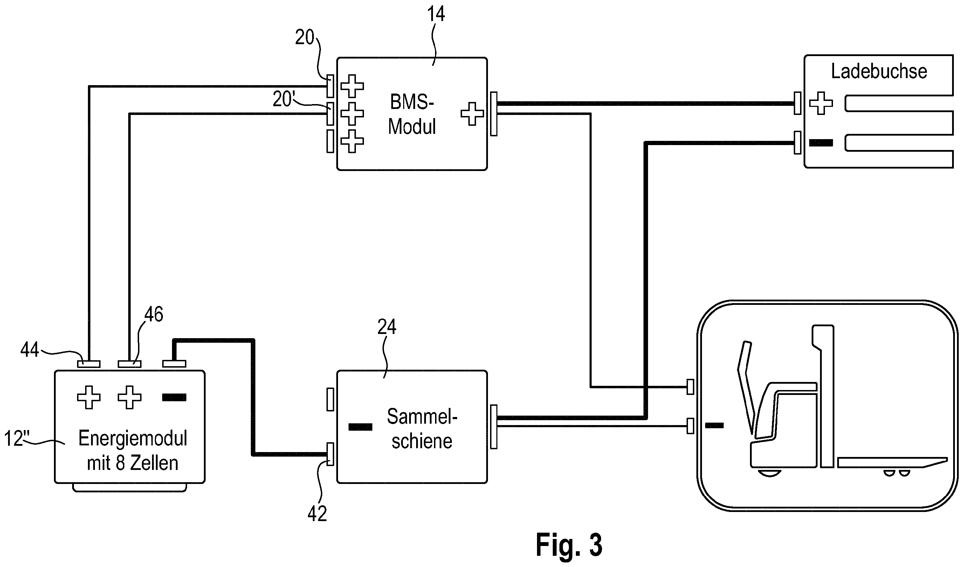

Fig. 3 zeigt eine weitere alternative Ausgestaltung des elektrischen Energiespeichers. Auch hier wird gegenüber den Fign. 1 und 2 das gleiche Bezugszeichen für gleiche Komponenten verwendet. In der dargestellten Konfiguration ist ein Batteriemodul 12" vorgesehen, das zwei Anschlusskontakte 44, 46 besitzt. Die Anschlusskontakte 44, 46 leiten jeweils ungefähr die Hälfte des Stroms an die Leistungskontakte 20, 20' des Batteriemanagementsystems 14. Wichtig zu beachten ist, dass hier die beiden Leistungskontakte 20, 20', auch wenn sie beide mit einem Batteriemodul 12' verbunden sind, nach wie vor die gleichen Anschlüsse wie das Ausführungsbeispiel aus Fig. 2 sind, bei dem zwei Batteriemodule 12, 12' an das Batteriemanagementsystem 14 angeschlossen sind.

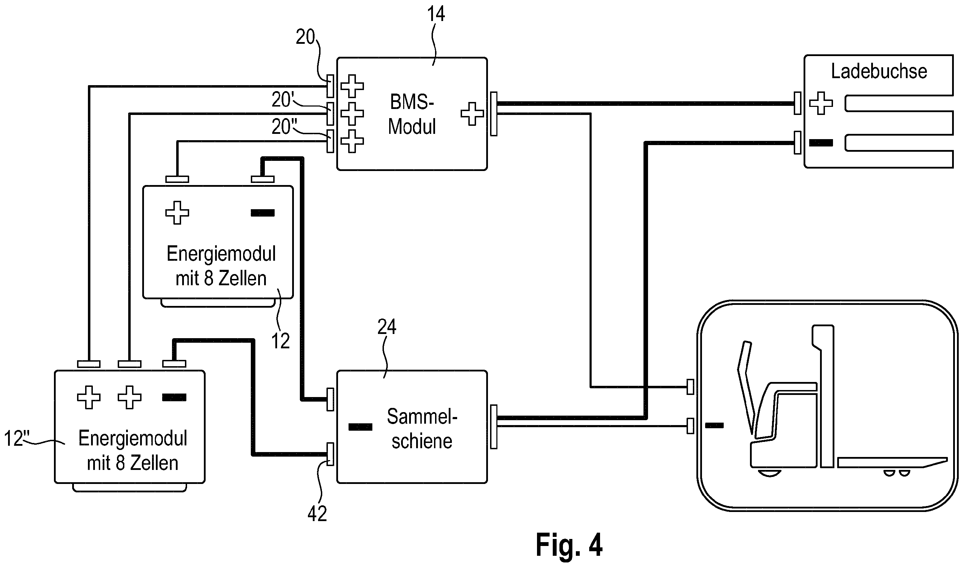

Fig. 4 zeigt ein gemischtes Ausführungsbeispiel, bei dem ein Batteriemodul 12" und ein Batteriemodul 12 an die Leistungskontakte des Batteriemanagementsystems 14 angeschlossen sind. In der dargestellten Konfiguration ist das Batteriemodul 12" mit 16 Batteriezellen ausgestattet und das Batteriemodul 12 mit acht Batteriezellen. Um der unterschiedlichen Kapazität der Batteriemodule Rechnung tragen, ist das Batteriemodul 12" mit den Leistungskontakten 20, 20'verbunden, während das Batteriemodul 12 mit dem Anschluss 20" verbunden ist.

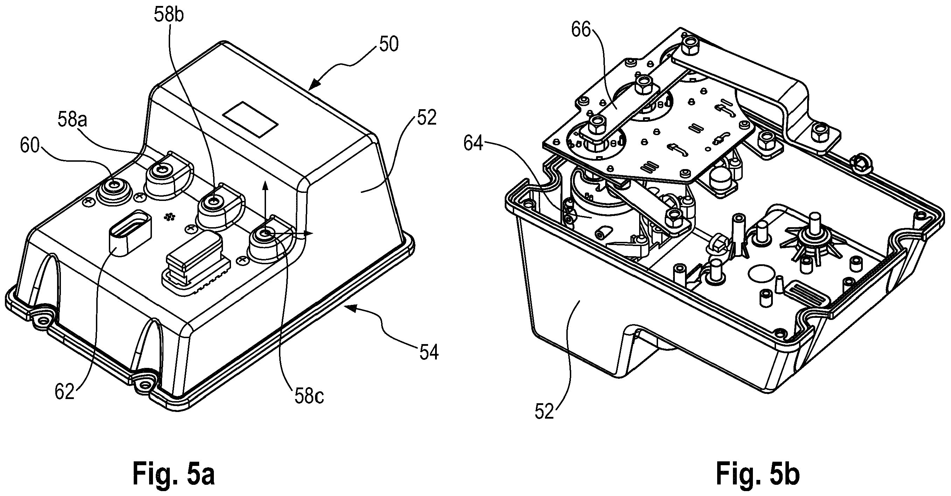

Fig. 5a zeigt eine Batteriemanagementsystem 50 mit seinem Gehäuse 52. Das Gehäuse 52 besitzt einen Boden 54. Die Verbindung zwischen Gehäuse 52 und Boden 54 ist über eine umlaufende Dichtung abgedichtet. Das Batteriemanagementsystem 50 besitzt drei Leistungskontakte 58a, 58b und 58c. Über die Leistungskontakte 58a-c ist das Batteriemanagementsystem 50 mit einem oder mehreren Batteriemodulen verbunden. Die Ausgabe aus dem Batteriemanagementsystem erfolgt über einen Kontakt 60. Zudem sind an dem Gehäuse 52 eine vorstehende Umrandung 62 für einen Steckverbinder zu erkennen. Die Umrandung 62 bildet auch eine Wandung.

Fig. 5b zeigt das Batteriemanagementsystem in einer Ansicht von unten bei abgenommener Bodenplatte. Das Gehäuse 52 ist hohl ausgebildet und besitzt in seinem Dom einen Hohlraum zur Aufnahme des Schützes 64. Die Schütze 64 sind untereinander über eine Stromschiene 66 verbunden. Ebenfalls besitzt jedes Schütz 64 einen Stromsensor, der eine kritische Stromstärke erfasst und das Schütz öffnet.

Der in den vorstehenden Ausführungsbeispielen gezeigte Energiespeicher ist als dezentrales Energiespeichersystem ausgebildet mit einem Batteriemanagementsystem und einem oder mehreren Batteriemodulen. Durch die Separierung des Batteriemanagementsystems als eigene Komponente können Schalter und Stromsensoren in dem Batteriemanagementsystem angeordnet werden und vereinfachen so den Aufbau der Batteriemodule. Die Batteriemodule mit verschiedenen Kapazitäten können ebenfalls mit dem Batteriemanagementsystem in unveränderter Form genutzt werden.

### Bezugszeichenliste

- 10: Flurförderzeug
- 12: Batteriemodul
- 12': Batteriemodul
- 12": Batteriemodul
- 14: Batteriemanagementsystem
- 16: Pluspol
- 16': Pluspol
- 18: Leitung
- 18': Leitung
- 20: Leistungsanschluss
- 20': Leistungskontakt
- 22: Minuspol / Kontakt
- 22': Kontakt
- 24: Sammelschiene
- 26: Minuspol /Anschluss
- 28: Pluspol / Kontakt
- 30: Ausgangsanschluss
- 32: Ladebuchse
- 34: Steckbuchse
- 36: Kontakt
- 38: Kontakt
- 40: Anschluss
- 42: Anschluss
- 44: Anschlusskontakt
- 46: Anschlusskontakt
- 50: Batteriemanagementsystem
- 52: Gehäuse
- 54: Boden
- 58a: Leistungskontakt
- 58b: Leistungskontakt
- 58c: Leistungskontakt
- 60: Kontakt
- 62: Umrandung
- 64: Schütz
- 66: Stromschiene

## Patentansprüche

1. Flurförderzeug (10) mit mindestens einem elektrisch gespeisten Antrieb und einem elektrischen Energiespeicher, der über ein Batteriemanagementsystem (BMS) (14) verfügt und mindestens ein Batteriemodul (12, 12', 12") aufweist, **dadurch gekennzeichnet, dass** das mindestens eine Batteriemodul (12, 12', 12") und das Batteriemanagementsystem (14) jeweils ein Gehäuse (52) mit elektrischen Anschlüssen aufweisen und die Gehäuse (52) räumlich voneinander getrennt in dem Flurförderzeug (10) angeordnet sind, wobei das Batteriemanagementsystem (14) mindestens einen Schalter aufweist, mit dem eine Verbindung zwischen dem mindestens einen Batteriemodul (12, 12', 12") und dem elektrisch gespeisten Antrieb getrennt werden kann.

2. Flurförderzeug (10) nach Anspruch 1, **dadurch gekennzeichnet, dass** das mindestens eine Batteriemodul (12, 12', 12") mehrere Batteriezellen aufweist und kein Schalter in den Batteriemodulen (12, 12', 12") vorgesehen ist, der eine Verbindung zwischen den Batteriezellen und den elektrischen Anschlüssen des jeweiligen Batteriemoduls (12, 12', 12") trennt.

3. Flurförderzeug (10) nach Anspruch 1 oder 2, **dadurch gekennzeichnet, dass** das Batteriemanagementsystem mit einer fahrzeugseitigen Ladebuchse (32) in Verbindung steht.

4. Flurförderzeug (10) nach einem der Ansprüche 1 bis 3, **dadurch gekennzeichnet, dass** eine Sammelschienen-Modul (24) vorgesehen ist, das einen Minuspol (22) des mindestens einen Batteriemoduls (12, 12', 12") mit dem mindestens einen elektrischen Antrieb verbindet.

5. Flurförderzeug (10) nach einem der Ansprüche 1 bis 4, **dadurch gekennzeichnet, dass** zwei oder mehr Batteriemodule (12, 12', 12") vorgesehen sind, die von dem Batteriemanagementsystem (14) gesteuert werden.

6. Flurförderzeug nach einem der Ansprüche 1 bis 5, **dadurch gekennzeichnet, dass** das mindestens eine Batteriemodul (12, 12', 12") mehrere Batteriestacks aufweist, die jeweils einen Stackcontroller und/oder einen Verbund von Zellcontrollern besitzen.

7. Flurförderzeug (10) nach Anspruch 6, **dadurch gekennzeichnet, dass** die Stackcontroller mit dem Batteriemanagementsystem (14) verbunden sind.

8. Flurförderzeug (10) nach einem der Ansprüche 1 bis 7, **dadurch gekennzeichnet, dass** das Batteriemanagementsystem (14) in einem Gehäuse (52) untergebracht ist, das mehrere Leistungskontakte (58a, 58b, 58c) für die Batteriemodule und mindestens einen Ausgangskontakt für die elektrischen Verbraucher aufweist, wobei jeder der Leistungskontakte (58a, 58b, 58c) ein Schütz (64) aufweist.

9. Flurförderzeug (10) nach Anspruch 8, **dadurch gekennzeichnet, dass** die Leistungs- und/oder die Ausgangskontakte in das Gehäuse (52) integriert sind, insbesondere in das Gehäusematerial eingespritzt sind.

10. Flurförderzeug (10) nach Anspruch 8 oder 9, **dadurch gekennzeichnet, dass** Stromsensoren für die mehreren Leistungskontakte (58a, 58b, 58c) vorgesehen sind.

11. Flurförderzeug (10) nach einem der Ansprüche 1 bis 10, **dadurch gekennzeichnet, dass** das Batteriemanagementsystem (14) einen oder mehrere Anschlüsse für elektrische Steckverbinder aufweist.

12. Flurförderzeug (10) nach einem der Ansprüche 1 bis 11, **dadurch gekennzeichnet, dass** eine Signalleitung für einen bidirektionalen Signalaustausch zwischen dem Batteriemanagementsystem (14) und dem mindestens einem Batteriemodul (12, 12', 12") vorgesehen ist.
